# EUROPEAN PATENT APPLICATION

(11) **EP 4 239 033 A1**
(43) Date of publication of application: **06.09.2023**
(21) Application number: 21886489.0
(22) Date of filing: 15.07.2021
(51) Int. Cl.: C09K 5/10

(54) **COOLING LIQUID COMPOSITION FOR ELECTRIC VEHICLE**

(30) Priority: 29.10.2020 KR 20200142461
(71) Applicant: KD Finechem Co., Ltd., Saha-gu Busan 49432 (KR)
(72) Inventor: PARK, Jae Yoon, Seoul 06288 (KR); PARK, Hyun Jin, Seongnam-si, Gyeonggi-do 13455 (KR); LEE, Hong Ki, Busan 46765 (KR); YOON, Sang Jun, Busan 46726 (KR); KIM, Ja Won, Busan 47610 (KR)
(74) Representative: Plougmann Vingtoft a/s
(86) International application number: PCT/KR2021/009103
(87) International publication number: WO 2022/092490

(57) **Abstract**

The present disclosure relates to a cooling liquid composition for an electric vehicle. The purpose of the composition according to the present disclosure is to effectively control heat generated during the operation of electronic components which are constituent elements of the electric vehicle, thereby enhancing the durability of the components and ensuring stability. The present disclosure has the effect that the anti-corrosion properties between components of a cooling system are excellent, while the effect of the generation of precipitates that form when electricity flows is small.

## Description

### Technical Field

This patent application claims priority to and the benefit of Korean Patent Application No. 10-2020-0142461 filed with the Korean Intellectual Property Office on October 29, 2020, the disclosure of which is incorporated herein by reference.

The present disclosure relates to a coolant composition for an electric vehicle.

### Background Art

A heat transfer system in thermal communication with a power source is used to control the heat generated during operation of the power source. For example, automobiles employ heat transfer fluids and cooling systems that transfer and dissipate heat generated as a by-product of the operation of gasoline internal combustion engines. In this regard, the heat transfer fluid and cooling system ensure that the engine operates in an optimal environment and is not exposed to undesirable high temperatures.

However, alternatives to conventional gasoline internal combustion engines, particularly alternatives that address public concerns regarding the management of the environment and natural resources, are now desirable. Consequently, new power source technologies, particularly those that provide improvements in energy efficiency, must continue to be developed. Examples of alternative power sources that have been developed include, but are not limited to, batteries, fuel cells, solar photovoltaic cells, and engines powered by condensed vapor, natural gas, hydrogen, and the like. These alternative power sources may be used alone or in combination and, for example, are employed in hybrid vehicles.

Although these alternative power sources generally have improved energy efficiency compared to gasoline internal combustion engines, they still require the use of heat transfer systems and heat transfer fluids. In particular, heat transfer systems and fluids are essential to maintain optimal operating conditions, particularly with respect to temperature.

Lithium secondary batteries used in electric vehicles must have high energy density and high output in a short time and must be used for more than 10 years under harsh conditions where charging and discharging by large currents are repeated in a short time. It is inevitably required to have superior safety and long-term lifespan characteristics compared to secondary batteries. In particular, cooling technology to solve the problem of heat generated during the use of lithium ion batteries is becoming an important issue.

However, conventional cooling systems and heat transfer fluids are not suitable for use with alternative power sources, particularly those employing electricity or an electrical charge. For example, conventional heat transfer fluids are generally characterized by very high conductivity, typically in the range of 3,000 uS/cm or greater. The use of highly conductive heat transfer fluids with alternative power sources, particularly electricity-based alternative power sources, may result in electric shock, increased corrosion, and/or short circuits in electrical circuits.

Consequently, conventional heat transfer fluids are unsuitable for use with alternative power sources, particularly electricity-based alternative power sources.

### Detailed Description of the Invention

### Technical Problem

Accordingly, the present disclosure aims to provide a coolant composition for an electric vehicle.

### Technical Solution

The present disclosure is drawn to a coolant composition for electric vehicles.

Below, a detailed description will be given of the present disclosure.

An embodiment of the present disclosure relates to a coolant composition comprising a solvent, an organic acid or a salt thereof, and an azole for an electric vehicle.

In the present disclosure, the solvent may be one having low electrical conductivity and immobility, for example, may be one or more selected from the group consisting of water, alcohols, glycols and glycol ethers, for example, may be a mixture of ethylene glycol and water, but is not limited thereto.

In the present disclosure, any alcohol known in the art may be used, for example, at least one selected from the group consisting of methanol, ethanol, propanol, butanol, pentanol, hexanol, heptanol, and octanol may be used, but with no limitations thereto.

In the present disclosure, any glycol known in the art may be used and, for example, at least one glycol selected from the group consisting of ethylene glycol, diethylene glycol, triethylene glycol, propylene glycol, 1,3-propanediol, 1,3-butanediol, 1,5-pentanediol, and hexylene glycol may be used, but with no limitations thereto.

So long as it is known in the art, any glycol ether may be used in the present disclosure. For example, it may be at least one selected from the group consisting of ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether and tetraethylene glycol monobutyl ether, but is not limited thereto.

In the present disclosure, the water may be deionized water, pure distilled water, or secondary distilled water, but is not limited thereto.

In the present disclosure, the solvent may be contained in an amount of 1 to 99 % by weight, 10 to 99 % by weight, 20 to 99 % by weight, 30 to 99 % by weight, 40 to 99 % by weight, 50 to 99 % by weight, 60 to 99 % by weight, 70 to 99 % by weight, or 80 to 99 % by weight, for example, 90 to 99 % by weight, based on the total weight of the composition, but with no limitations thereto.

In the present disclosure, when the solvent contains a glycol, the glycol may be used in an amount of 88 % by weight or more, for example, 88 to 98 % by weight, 89 to 98 % by weight, 90 to 98 % by weight, or 91 to 98 % by weight, based on the total weight of the composition, but with no limitations thereto.

When the solvent includes water in the present disclosure, the water may be used in an amount of 10 % by weight or less, for example, 1 to 10 % by weight, 1 to 9 % by weight, 2 to 10 % by weight, 2 to 9 % by weight, based on the total weight of the composition, but with no limitations thereto.

In the present disclosure, the organic acid or the salt thereof may be at least one selected from the group consisting of 2-ethylhexanoic acid, sebacic acid, toluic acid, adipic acid, suberic acid, glutaric acid, neodecanoic acid, neo-octanoic acid, succinic acid, cinnamic acid, azelaic acid, methylcinnamic acid, hydroxycinnamic acid, ethylcinnamic acid, propylcinnamic acid, butylcinnamic acid, ethoxycinnamic acid, ethylbenzoic acid, propylbenzoic acid, pimelic acid, dicyclopentadiene dicarboxylic acid , undecanoic acid, benzoic acid, toluic acid, nonanoic acid, phthalic acid, decanoic acid, terephthalic acid, dotecanoic acid, hexanoic acid, cyclohexenoic acid, 2-ethylhexanoic acid, sebacic acid, decanedicarboxylic acid, t-butylbenzoic acid, and octanoic acid, but with no limitations thereto.

In one embodiment of the present disclosure, the organic acid or the salt thereof may be at least one selected from the group consisting of 2-ethylhexanoic acid, sebacic acid, and toluic acid.

According to the present disclosure, the organic acid or the salt thereof may be contained in an amount of 0.1 (inclusive) to 6.00 % by weight (exclusive), 0.1 to 5.00 % by weight (both inclusive), 0.1 to 4.00 % by weight (both inclusive), 0.1 to 3.00 % by weight (both inclusive), for example, 0.1 to 2.0 % by weight (both inclusive), based on the total weight of the composition.

In the present disclosure, the azole may be contained in an amount of 0.02 (inclusive) to 3.00 % by weight (exclusive), 0.02 (inclusive) to 2.00 % by weight (exclusive), 0.02 (inclusive) to 1.00 % by weight (exclusive), 0.1 (inclusive) to 3.00 % by weight (exclusive), 0.1 (inclusive) to 2.00 % by weight (exclusive), 0.1 (inclusive) to 1.00 % by weight (exclusive), 0.2 (inclusive) to 3.00 % by weight (exclusive), 0.2 (inclusive) to 2.00 % by weight (exclusive), for example, 0.2 (inclusive) to 1.0 % by weight (exclusive), based on the total weight of the composition.

In the present disclosure, the azole may be a type of triazole, but with no limitations thereto.

In the present disclosure, the azole may be an azole bearing no sulfur elements, but are not limited thereto.

In the present disclosure, the triazole-type compound may be selected from the group consisting of triazole derivatives, benzotriazole derivatives, and tolutriazole derivatives, but is not limited thereto.

In the present disclosure, examples of the triazole-type compound include N,N-bis(2-ethylhexyl)-4-methyl-1 H-benzotriazole-1-methylamine, N,N-bis(2-ethylhexyl)-5-methyl-1 H-benzotriazole-1-methylamine, octyl-1H-benzotriazole, di-tert-butyl-1H-benzotriazole, 1H-1,2,3-triazole, 2H-1,2,3-triazole, 1H-1,2,4-triazole, 4H-1,2,4-triazole, 1-(1', 2'-di-carboxyethyl) benzotriazole, 2-(2'-hydroxy-5'-methyl phenyl)benzotriazole, 1H-1,2,3-triazole, 2H-1,2,3-triazole, 1H-1,2,4-triazole, 4H-1,2,4-triazole, benzotriazole, tolyltriazole, carboxybenzotriazole, 3-amino-1,2,4-triazole, chlorobenzotriazole, nitrobenzotriazole, aminobenzotriazole, cyclohexano[1, 2-d]triazole, 4,5,6,7-tetrahydroxytolyltriazole, 1-hydroxybenzotriazole, ethyl benzotriazole, naphthotriazole, 1-[N,N-bis(2-ethylhexyl)aminomethyl]benzotriazole, 1-[N,N-bis(2-ethylhexyl) aminomethyl]tolyltriazole, 1-[N,N-bis(2-ethylhexyl) aminomethyl]carboxybenzotriazole, 1-[N,N-bis(di-(ethanol)-aminomethyl]benzotriazole, 1-[N,N-bis(di-(ethanol)-aminomethyl]tolyltriazole, 1-[N,N-bis(di-(ethanol)-aminomethyl]carboxybenzotriazole, 1-[N,N-bis(2-hydroxypropyl) aminomethyl]carboxybenzotriazole, 1-[N,N-bis(1-butyl) aminomethyl]carboxybenzotriazole, 1-[N,N-bis(1-octyl) aminomethyl]carboxybenzotriazole, 1-(2', 3'-di-hydroxy propyl) benzotriazole, 1-(2', 3'-di-carboxyethyl) benzotriazole, 2-(2'-hydroxy-3',5'-di-tert-butyl phenyl) benzotriazole, 2-(2'-hydroxy-3',5'-di-tert-amylphenyl) benzotriazole, 2-(2'-hydroxy-4'-octoxyphenyl) benzotriazole, 2-(2'-hydroxy-5'-tert-butylphenyl) benzotriazole, 1-hydroxybenzotriazole-6-carbxylic acid, 1,2,4-triazol-3-ol, 3-amino-5-phenyl-1,2,4-triazole, 3-amino-5-heptyl-1,2,4-triazole, 3-amino-5-(4-isopropylphenyl)-1,2,4-triazole, 3-amino-5-(p.tert-butylphenyl)-1,2,4-triazole, 5-amino-1,2,4-triazole-3-carbxylic acid, 1,2,4-triazole-3-carboxyamide, 4-aminourazole, 1,2,4-triazol-5-one, but are not limited thereto.

In one embodiment of the present disclosure, the azole may be at least one selected from the group consisting of benzotriazole, tolyltriazole, and 1,2,4-triazole.

In the present disclosure, the coolant composition may have a pH of 5.5 to 10.0, 6.0 to 10.0, 5.5 to 9.5, 6.0 to 9.5, for example, 6.0 to 9.0, but is not limited thereto.

In the present disclosure, the coolant composition may further include a pH adjusting agent.

No limitations are imparted to the pH adjusting agent so long as it adjusts the pH of the composition into a range of 5.5 to 10.0, 6.0 to 10.0, 5.5 to 9.5, 6.0 to 9.5, for example, 6.0 to 9.0.

In the present disclosure, the pH adjusting agent may be an alkali metal hydroxide and may be, for example, at least one selected from the group consisting of lithium hydroxide, sodium hydroxide, potassium hydroxide, and triethylamine, but with no limitations thereto.

In the present disclosure, the coolant composition may be a coolant stock solution. For use as a final coolant in the present disclosure, the coolant composition may be diluted into 20 to 70 % by volume, 30 to 70 % by volume, 40 to 70 % by volume, 20 to 60 % by volume, 30 to 60 % by volume, for example, 40 to 60 % by volume in water, but with no limitations thereto.

### Advantageous Effects

The present disclosure relates to a coolant composition for an electric vehicle and the composition of the present disclosure is adapted for effectively controlling the heat generated during operation of electric parts, which are components of an electric vehicle, to secure durability and stability of the parts, and exhibits the excellent effect of corrosion resistance between parts of the cooling system, with little influence on the formation of precipitates.

### Best Mode for Carrying Out the Invention

Disclosed herein is a coolant composition, comprising a solvent, an organic acid or a salt thereof, and azoles, for an electric vehicle.

### Mode for Carrying Out the Invention

Below, a better understanding of the present disclosure may be obtained through the following examples, which are set forth to illustrate, but are not to be construed as limiting the present disclosure.

### PREPARATION EXAMPLE. Preparation of Coolant composition

### EXAMPLES 1 TO 6

Coolant compositions of various formulations for electric vehicles were prepared as shown in Table 1 below. Ingredients and contents included in each composition are given in Table 1. Water and ethylene glycol were used as solvents. The contents given are expressed in % by weight for the solvents, but in parts by weight for ingredients other than the solvents, based on 100 parts by weight of the composition.

**TABLE 1**

| | Ex. 1 | Ex. 2 | Ex. 3 | Ex. 4 | Ex. 5 | Ex. 6 |
|---|---|---|---|---|---|---|
| Ethylene glycol | 90.00% | 90.00% | 90.00% | 90.00% | 90.00% | 90.00% |
| Deionized water | 8.63% | 7.65% | 6.65% | 8.87% | 6.30% | 2.25% |
| 2-Ethylhexanoic acid/Sebacic acid | 1.00% | 1.00% | 1.00% | 0.10% | 2.00 | 5.00% |
| Azoles (benzotriazole/toly ltriazole/1,2,4-triazole) | 0.02% | 1.00% | 2.00% | 1.00% | 1.00% | 1.00% |
| Sodium hydroxide | 0.35% | 0.35% | 0.35% | 0.04% | 0.70% | 1.75% |

**TABLE 2**

| | C. Ex. 1 | C. Ex. 2 | C. Ex. 3 | C. Ex. 4 | C. Ex. 5 | C. Ex. 6 | C. Ex. 7 | C. Ex. 8 |
|---|---|---|---|---|---|---|---|---|
| Ethylene glycol | 90.00% | 90.00% | 90.00% | 90.00% | 90.00% | 90.00% | 90.00% | 90.00% |
| Deionized water | 8.64% | 5.6 % | 8.93% | 0.90% | 4.95% | 3.70% | 4.95% | 4.95% |
| 2-Ethylhexanoic acid/Sebacic acid | 1.00% | 1.00% | 0.05% | 6.00% | 2.00% | 2.00% | 2.00% | 2.00% |
| Azoles (benzotriazole/ tolyltriazole/1 ,2,4-triazole) | 0.01% | 3.00% | 1.00% | 1.00% | 1.00% | 1.00% | 1.00% | 1.00% |
| Sodium hydroxide | 0.35% | 0.35% | 0.02% | 2.10% | 1.05% | 2.30% | 1.05% | 1.05% |
| Benzoic acid | | | | | 1% | | | |
| Phosphoric acid | | | | | | 1% | | |
| Mercaptobenzoth iazole | | | | | | | 1% | |
| Dimercaptothiad iazole | | | | | | | | 1% |

### EXPERIMENTAL EXAMPLE 1. Evaluation for Metal Corrosion

According to the ASTM D 1384 standard, parts for vehicles were evaluated for corrosion resistance. Specifically, the set of specimens indicated in the standard was employed and the combined corrosive water (sodium sulfate 148 ppm, sodium chloride 165 ppm, sodium bicarbonate 138 ppm) was applied thereto. The coolants were diluted by 33 % before evaluation at 88°C for 336 hours. The results are shown in Table 3 (the liquid phase results were based on the amounts of precipitates obtained by centrifugation after the end of the test. When the amount of the precipitates was 0.1 or more (vol %), it was indicated as precipitation.)

**TABLE 3**

| Metal corrosion evaluation (ASTM 1384) | | Aluminum | Cast iron | Steel | Brass | Solder | Copper | Liquid phase | Precipi tate amount (vol %) |
|---|---|---|---|---|---|---|---|---|---|
| Weight change (mg) | | 30 max | 10 max | 10 max | 10 max | 30 max | 10 max | | |
| Ex. 1 | Good | -1.7 | -3.4 | -0.3 | -2.7 | -3.0 | -2.3 | No precipi tation | < 0.1 |
| Ex. 2 | Good | 1.0 | -0.5 | -1.8 | -1.1 | -4.3 | -0.7 | No precipi tation | < 0.1 |
| Ex. 3 | Good | -1.5 | 0.5 | 0.3 | 0.9 | -3.1 | 0.8 | No precipi tation | < 0.1 |
| Ex. 4 | Good | -5.3 | -6.7 | -2.2 | -2.9 | -7.7 | -1.9 | No precipitation | < 0.1 |
| Ex. 5 | Good | -2.0 | -3.2 | -1.8 | -0.7 | -3.4 | 0.5 | No precipi tation | < 0.1 |
| Ex. 6 | Good | -1.1 | -0.8 | -0.5 | -0.8 | -1.8 | -0.9 | No precipi tation | < 0.1 |
| C. Ex. 1 | Fail | -11.0 | -14.7 | -12.2 | -23.6 | -15.0 | -47.3 | Precipi tation | 0.3 |
| C. Ex. 2 | Fail | -14.8 | -8.1 | -8.4 | -9.7 | -74.0 | -6.6 | Precipi tation | 0.6 |
| C. Ex. 3 | Fail | -22.4 | -42.8 | -31.9 | -14.0 | -9.4 | -21.0 | Precipi tation | 1 |
| C. Ex. 4 | Fail | -2.0 | -0.3 | -0.2 | -0.8 | 1.0 | 1.1 | Precipi tation | 0.5 |
| C. Ex. 5 | Good | -1.3 | 1.0 | -0.8 | -1.4 | -6.6 | 1.9 | No precipi tation | < 0.1 |
| C. Ex. 6 | Good | 0.4 | -0.7 | 0.5 | 1.1 | -8.4 | -0.7 | No precipi tation | < 0.1 |
| C. Ex. 7 | Good | 0.7 | -0.5 | -0.8 | 0.8 | -5.6 | -2.1 | No precipi tation | < 0.1 |
| C. Ex. 8 | Good | -1.2 | 1.1 | 0.8 | -2.3 | -3.9 | -3.0 | No precipi tation | < 0.1 |

As can be seen in Table 3, none of the test pieces of Experimental Examples 1 to 6 and Comparative Examples 5 to 8 underwent corrosion and precipitation.

### EXPERIMENTAL EXAMPLE 2. Current Evaluation

A battery used as a power source for electric vehicles consists of cells, modules, and packs. The cells are each adapted to have 3.75 volts and connected in series to form a 90-volt module unit. The module units are combined in series and/or parallel to configure a battery pack for a vehicle, with the number of the module units adjusted according to the design of the vehicle. Among the battery constituent units, examination was made of the influence of the coolant on the module voltage.

Specifically, each of the coolants prepared in the Examples and Comparative Examples was diluted by 50 % by weight in distilled water. Then, a 10-pin connector (female) used as a battery component was immersed in the diluted coolant before a current of 90 V was applied to the 10-pin connector for 4 hours or longer. Afterward, the current was cut off and the amount of material generated in the 10-pin connector was checked. The results are shown in Table 5 according to the standards of Table 4.

**TABLE 4**

| Mark | Standard |
|---|---|
| ⊚ | No precipitates to the extent of clogging the pinhole |
| ○ | Only 1 or 2 pinholes are clogged |
| Δ | Pinholes clogged by precipitate |
| X | Pinholes covered by precipitate |

**TABLE 5**

| | Results of current evaluation |
|---|---|
| Ex. 1 | ⊚ |
| Ex. 2 | ⊚ |
| Ex. 3 | ○ |
| Ex. 4 | ⊚ |
| Ex. 5 | ⊚ |
| Ex. 6 | ⊚ |
| C. Ex. 1 | ⊚ |
| C. Ex. 2 | △ |
| C. Ex. 3 | ⊚ |
| C. Ex. 4 | △ |
| C. Ex. 5 | X |
| C. Ex. 6 | X |
| C. Ex. 7 | X |
| C. Ex. 8 | X |

Among Examples 1 to 6 and Comparative Examples 4 to 8, which exhibited good results in Experimental Example 1, Examples 1 to 6 were observed to obtain good results. In particular, the coolants of Examples 1, 2, 4 and 5 did not generate precipitates enough to clog the pinhole. Comparative Examples 4 to 8, although exhibiting excellent metal corrosion evaluation results, were observed to generate precipitates to clog the pinholes.

### Industrial Applicability

The present disclosure relates to a coolant composition for an electric vehicle.

## Claims

1. A coolant composition for an electric vehicle, comprising a solvent, an organic acid or a salt thereof, and an azole.

2. The coolant composition of claim 1, wherein the solvent is at least one selected from the group consisting of water, alcohol, glycol, and glycol ether.

3. The coolant composition of claim 1, wherein the solvent is contained in an amount of 1 to 99 % by weight, based on the total weight of the composition.

4. The coolant composition of claim 2, wherein the glycol is contained in an amount of 88 % by weight or more, based on the total weight of the composition.

5. The coolant composition of claim 2, wherein the water is contained in an amount of 10 % by weight or less, based on the total weight of the composition.

6. The coolant composition of claim 1, wherein the organic acid or the salt thereof is at least one selected from the group consisting of 2-ethylhexanoic acid, sebacic acid, toluic acid, adipic acid, suberic acid, glutaric acid, neodecanoic acid, neooctanoic acid, succinic acid, cinnamic acid, azelaic acid, methylcinnamic acid, hydroxycinnamic acid, ethylcinnamic acid, propylcinnamic acid, butylcinnamic acid, ethoxycinnamic acid, ethylbenzoic acid, propylbenzoic acid, pimelic acid, dicyclopentadiene dicarboxylic acid, undecanoic acid, benzoic acid, toluic acid, nonanoic acid, phthalic acid, decanoic acid, terephthalic acid, dotecanoic acid, hexanoic acid, cyclohexenoic acid, 2-ethylhexanoic acid, sebacic acid, decanedicarboxylic acid, t-butylbenzoic acid, octanoic acid, and heptanoic acid.

7. The coolant composition of claim 1, wherein the organic acid or the salt thereof is contained in an amount of 0.1 (inclusive) to 6.00 % by weight (exclusive), based on the total weight of the composition.

8. The coolant composition of claim 1, wherein the azole is a type of triazole.

9. The coolant composition of claim 1, wherein the azole is contained in an amount of 0.02 (inclusive) to 3.00 % by weight (exclusive), based on the total weight of the composition.

10. The coolant composition of claim 1, wherein the coolant composition has a pH of 5.5 to 10.0.

11. The coolant composition of claim 1, wherein the coolant composition further comprises a pH adjusting agent.

12. The coolant composition of claim 11, wherein the pH adjusting agent is an alkali metal hydroxide.
